# EUROPÄISCHE PATENTSCHRIFT

(11) **EP 1 201 123 B1**
(45) Veröffentlichungstag und Bekanntmachung des Hinweises auf die Patenterteilung: **25.04.2012**
(21) Anmeldenummer: 01124560.2
(22) Anmeldetag: 13.10.2001
(51) Int. Cl.: A01M 7/00, A01B 73/06

(54) **Gestänge**
Boom
Rampe

(30) Priorität: 27.10.2000 US 698991
(43) Veröffentlichungstag der Anmeldung: 02.05.2002
(73) Patentinhaber: DEERE & COMPANY, Moline, Illinois 61265-8098 (US)
(72) Erfinder: Humpal, Richard Allen, Ankeny, IA 50021 (US)
(74) Vertreter: Magin, Ludwig Bernhard

(56) Entgegenhaltungen:
- EP-A- 0 428 960
- DE-A1- 3 708 971
- GB-A- 2 230 385
- US-A- 5 988 528
- US-A- 6 119 963

## Beschreibung

Die Erfindung betrifft ein Gestänge eines landwirtschaftlichen Geräts mit mehreren Gestängeabschnitten, die gelenkig miteinander verbunden sind und mittels wenigstens zweier Motoren in eine erste und eine zweite Klappstellung bringbar sind, sowie ein Verfahren.

Die DE 37 08 971 A1 offenbart eine Spritze mit einem mehrteiligen Spritzgestänge, wobei einzelne Gestängeabschnitte des Spritzgestänges mittels eines konzentrisch zu jeweils einer Schwenkachse angeordneten pneumatischen Motors verstellt werden können. Den Motoren kann jeweils ein eigenes Ventil zugeordnet werden, das an dem ansteigenden Druck erkennt, wann ein Motor sein Hubende erreicht hat, und einen weiteren Motor zum Einklappen des nächstinneren Gestängeabschnitts beaufschlagt.

Das der Erfindung zugrunde liegende Problem wird darin gesehen, daß die Erzeugung eines Überdrucks Belastungen und eine Erwärmung der Druckluft hervorruft. Außerdem funktioniert diese Vorrichtung nur beim Einklappen des Gestänges, hingegen nicht beim Ausklappen. Schließlich kann ein Überdruck auch bereits dann entstehen, wenn sich dem Klappvorgang ein Widerstand entgegenstellt, obwohl der betreffende Gestängeabschnitt noch nicht seine eingeklappte Stellung erreicht hat.

Dieses Problem wird erfindungsgemäß durch die Lehre des Patentanspruchs 1 bzw. 9 und 10 gelöst, wobei in den weiteren Patentansprüchen die Lösung in vorteilhafter Weise weiterentwickelnde Merkmale aufgeführt sind.

Auf diese Weise wird zuverlässig ermittelt, wann das Gestänge seine aus- oder eingeklappte Stellung eingenommen hat. Sollte das Gestänge z. B. aufgrund eines mechanisches Defekts, eines Hindernisses oder dergleichen nicht ganz ein- oder ausgeklappt werden können, wird der Sensor eine Aktivierung des nächsten Motors nicht zulassen. Sowohl ein berührungsloser Sensor, z. B. ein Reedsensor, als auch ein mechanischer Sensor, z. B. mit einer Drucktaste, -kugel, -nocken oder dergleichen können zu diesem Zweck verwendet werden. Gleichsam ist eine Kombination beider möglich. Insbesondere bei einem Gestänge mit mehreren Gestängeabschnitten, z. B. drei oder vier Gestängeabschnitten, wird so eine Verkettung nicht gewollter und evtl. zu Beschädigungen führender Bewegungen verhindert. Diese In-Reihe-Schaltung kann sowohl beim Aus- wie auch beim Einklappen verwendet werden, sodaß Torsionsmomente in den jeweils belasteten Gestängeabschnitten niedrig gehalten werden können.

Ein in den Motor, d. h. in sein Gehäuse oder sein Stellglied, z. B. das Zylindergehäuse oder die Hydraulikkolbenstange, eingebauter Sensor, befindet sich in einer geschützten Lage. Dieser Schutz führt zu einer erhöhten Zuverlässigkeit, da der Sensor nicht von Hindernissen, wie Sträuchern, festen Pflanzen oder dergleichen erfasst werden kann. Außerdem greifen kein aggressives Spritzmittel, kein Wasser und keine Pflanzenkräfte an ihm an, die zu Funktionsstörungen führen könnten.

Unter den verschiedenen Arten von Sensoren sind berührungslos arbeitende, insbesondere mit Magnetfeldern, sehr vorteilhaft, weil sie keinem Verschleiß unterliegen, geräuscharm funktionieren und auch bei mechanischen Verspannungen in dem Anbaubereich nicht, jedenfalls kaum beeinträchtigt werden. Die Verwendung eines Magnets hat zudem den Vorteil, daß sich kleinste Stahlpartikel an dem Magneten anlagern und somit evtl. Öl saubergehalten wird, was Dichtungen vor vorzeitigem Verschleiß bewahrt.

Die Vorgänge zum Betätigen des Schalters oder Sensors laufen innerhalb des Motors und in vollkommen geschützter Umgebung ab, wenn in dem Motor eine Kammer vorgesehen ist, in die sich der Sensor erstreckt, der den Schalter betätigt. Wenn der Sensor auf einem Teil der Kolbenstange angeordnet ist, der sich über den Kolben hinauserstreckt, kann sich der Schalter außerhalb des eigentlichen Druckraums des Motors befinden und wird dennoch erst erreicht, wenn der Kolben auf dem Zylinderboden aufsitzt.

Wenn die jeweils eingefahrene Stellung des Motors bei einem innenliegenden Gestängeabschnitt des Gestänges der ausgefalteten und bei einem außenliegenden Gestängeabschnitt des Gestänges der eingefalteten Stellung entspricht, ist es möglich, zwei von der Bauart gleich ausgebildete Motoren zu verwenden, wobei einer ein Signal für das Einfalten und einer ein Signal für das Ausfalten liefert.

Die Verwendung eines Relais, das bei der Aktivierung des Ein- oder Ausklappvorgangs durch den Hauptschalter angezogen wird und bleibt und erst dann abfällt und den Stromfluss zu dem Ventil für den nächsten Motor frei gibt, wenn der betreffende Motor seine Endstellung erreicht hat und der betreffende Hauptschalter niedergedrückt ist, stellt sicher, daß der zweite Motor erst dann betätigt werden kann, wenn der erste den zugeordneten Gestängeabschnitt des Gestänges ganz eingeklappt hat. Eine Bedienungsperson muß folglich auch nicht den genauen Zeitpunkt des Einklappens abwarten, bevor sie den nächsten Gestängeabschnitt bewegt.

Die Anwendung der vorliegenden Erfindung bei einer großen Schädlingsbekämpfungsspritze führt zu einem Gestänge mit einem mittleren Gestängetragrahmen, an den seitlich jeweils ein innerer Gestängeabschnitt, an diesen ein äußerer Gestängeabschnitt, jeweils um wenigstens vertikal ausgerichtete Schwenkachsen angeschlossen ist, wobei zwischen dem Gestängetragrahmen und dem inneren Gestängeabschnitt ein Motor wirkt, der zum Einklappen des inneren Gestängeabschnitts eingefahren wird, und zwischen dem inneren Gestängeabschnitt und dem äußeren Gestängeabschnitt ein Motor wirkt, der zum Einklappen des inneren Gestängeabschnitts eingefahren wird.

Wenn auch Elektromotoren oder Pneumatikmotoren anwendbar wären, so ist die Verwendung eines Motors doch vorteilhafter, weil er größere Kräfte übertragen kann.

Der Einbau der Steuervorrichtung, eines Sensors und eines Schalters in ein Gehäuse in den Motor macht eine leichte und schnelle Bestückung und Wartung der beteiligten Komponenten möglich.

Das in den Verfahrensansprüchen jeweils beanspruchte Verfahren stellt ein sicheres und relativ belastungsfreies Ein- und Ausklappen der Gestängeabschnitte sicher.

In der Zeichnung ist ein nachfolgend näher beschriebenes Ausführungsbeispiel der Erfindung dargestellt. Es zeigt:
- Fig. 1: ein linkes Gestänge eines Spritzgestängezusammenbaus,
- Fig. 2: einen Gestängetragrahmen mit daran angeschlossenen inneren Gestängeabschnitten eines linken und eines rechten Gestänges,

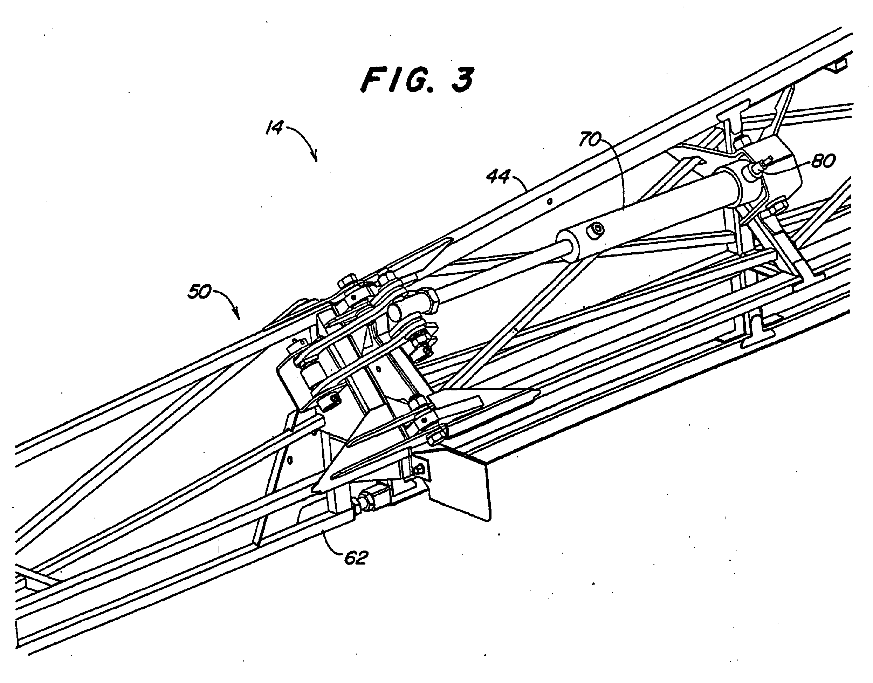

- Fig. 3: einen Gelenkbereich zwischen einem inneren und einem äußeren Gestängeabschnitt des linken Gestänges,
- Fig. 4a: das linke Gestänge in schematischer Darstellung und Draufsicht in einem vollkommen ausgeklappten Zustand, der einer Arbeitsstellung entspricht,
- Fig. 4b: das linke Gestänge gemäß Figur 4a, wobei der äußere Gestängeabschnitt an den inneren Gestängeabschnitt herangeklappt ist,
- Fig. 4c: das linke Gestänge gemäß Figur 4a, wobei der äußere Gestängeabschnitt an den inneren Gestängeabschnitt und der innere Gestängeabschnitt an ein landwirtschaftliches Gerät herangeklappt ist und somit das Gestänge seine Transportstellung einnimmt,
- Fig. 5: einen Elektroschaltkreis für den Einklapp- und den Ausklappvorgang, und
- Fig. 6: einen teilweisen Längsschnitt durch einen Motor zum Verstellen des Gestänges.

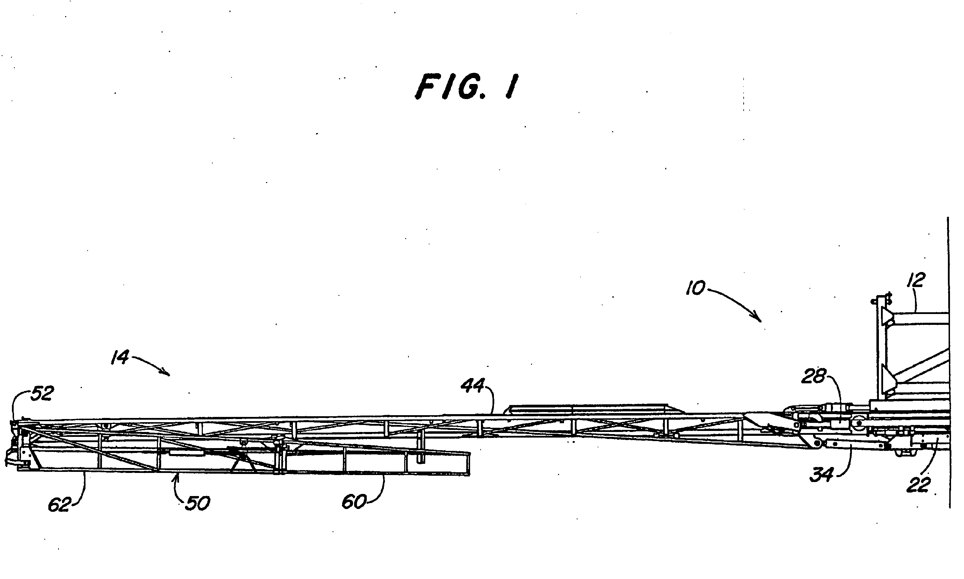

In Figur 1 ist ein Teil eines Spritzgestängezusammenbaus 10 gezeigt, der an einem Tragmast 12 befestigt ist, der wiederum auf ein landwirtschaftliches Gerät 13, z. B. ein Spritzfahrzeug wie das im Handel erhältliche Spritzfahrzeug JOHN DEERE Typ 4700, aufgebaut ist, das mit einer mittig angeordneten Kabine 13c versehen ist. Der Tragmast 12 ist gegenüber dem Gerät 13 vertikal verstellbar, um den Spritzgestängezusammenbau 10 anzuheben und abzusenken.

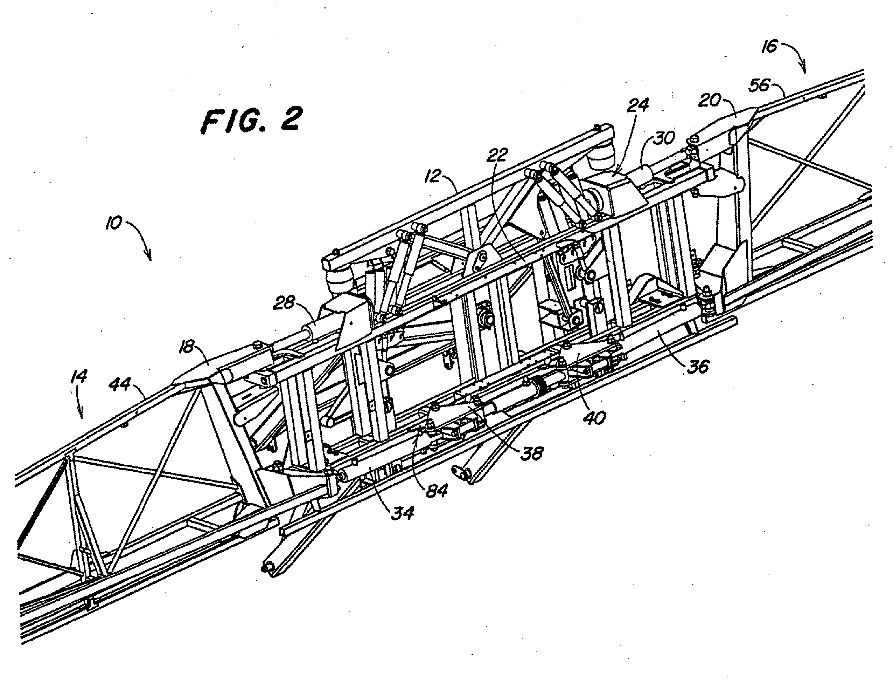

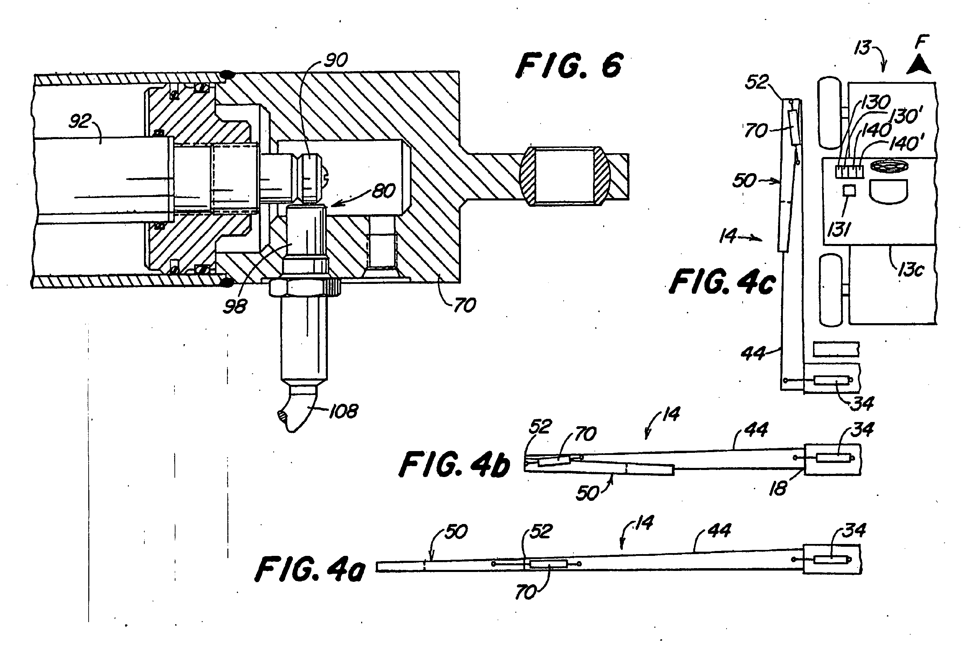

Der Spritzgestängezusammenbau 10 enthält ein linkes Gestänge 14 und ein rechtes Gestänge 16, von dem in Figur 2 ein Teil gezeigt ist. Das rechte Gestänge 16 ist im allgemeinen identisch mit der Konstruktion des linken Gestänges 14, weshalb nur das linke Gestänge 14 in seinen Einzelheiten beschrieben wird. Die Gestänge 14 und 16 enthalten innerste Enden 18 und 20, die an äußere Enden eines Gestängetragrahmens 22 schwenkbar angeschlossen sind. Der Gestängetragrahmen 22 ist rückwärtig nahe des Tragmasts 12 mittels eines Dämpfungsgestells abgestützt, das im allgemeinen mit 24 bezeichnet ist. Die Achsen der Schwenkverbindungen der Gestänge 14 und 16 mit dem Gestängetragrahmen 22 sind einstellbar, um die Höhe der Gestängespitzen einzustellen, wozu hydraulisch arbeitende Motoren 28 und 30 verwendet werden, die zwischen den oberen Bereichen der Enden 18 bzw. 20 und dem Gestängetragrahmen 22 eingefügt sind. Innere ebenfalls als Hydraulikzylinder ausgebildete Motoren 34 und 36 sind an mittige Träger 38 und 40 auf dem Gestängetragrahmen 22 angeschlossen, um die Gestänge 14, 16 zwischen ausgefalteten oder ausgeklappten Stellungen (Fig. 1, 2, 4a und 4b) und eingefalteten oder eingeklappten Stellungen (Fig. 4c) zu bewegen.

Das Gestänge 14 enthält einen inneren Gestängeabschnitt 44 und einen äußeren Gestängeabschnitt 50, die in einem Gelenk 52 miteinander verbunden sind, um in Bezug auf den inneren Gestängeabschnitt 44 zwischen einer eingefalteten Stellung (Fig. 1, 4b und 4c) und einer ausgefalteten Stellung (Fig. 4a) zu schwenken. Das rechte Gestänge 16 enthält einen vergleichbaren inneren Gestängeabschnitt 56 und einen nicht gezeigten äußeren Gestängeabschnitt, die dem Gestänge 14 vergleichbar schwenken. Der äußere Gestängeabschnitt 50, wie er in Figur 1 gezeigt ist, enthält einen äußeren Schwenkabschnitt 60, der in eine ausgefaltete Stellung federvorgespannt ist, der aber gegenüber einem verbleibenden inneren Bereich 62 schwenken kann, wenn das Ende des Gestänges 14 an ein Hindernis anschlägt, während es sich in der ganz ausgefahrenen Stellung (Fig. 4a) befindet.

Ein äußerer als sog. Hydraulikzylinder ausgebildeter Motor 70 zum Falten des Gestänges 14 ist zwischen den äußeren Endbereich des inneren Gestängeabschnitts 44 und den inneren Endbereich des äußeren Gestängeabschnitts 50 eingebaut. Ein vollkommenes Ausfahren des Motors 70 (Fig. 4a) schwenkt den äußeren Gestängeabschnitt 50 in Bezug auf den inneren Gestängeabschnitt 44 in die ausgefaltete Stellung. Um den äußeren Gestängeabschnitt 50 in die eingefaltete Stellung (Fig. 1, 4b und 4c) zu bewegen, wird der Motor 70 vollkommen eingefahren. Wenn die Motoren 34 und 36 eingefahren werden (Fig. 1, 2, 4a und 4b), bewegen sie die inneren Gestängeabschnitte 44, 56 in die ungefaltete Stellung. Durch das Ausfahren der Motoren 34 und 36 drehen sich die inneren Gestängeabschnitte 44, 56 um ihre Gelenkanbindungen an dem Gestängetragrahmen 22 nach vorne in die gefaltete Stellung (Fig. 4c) nahe der Seiten des Geräts 13 und erstrecken sich bis vor die Kabine 13c.

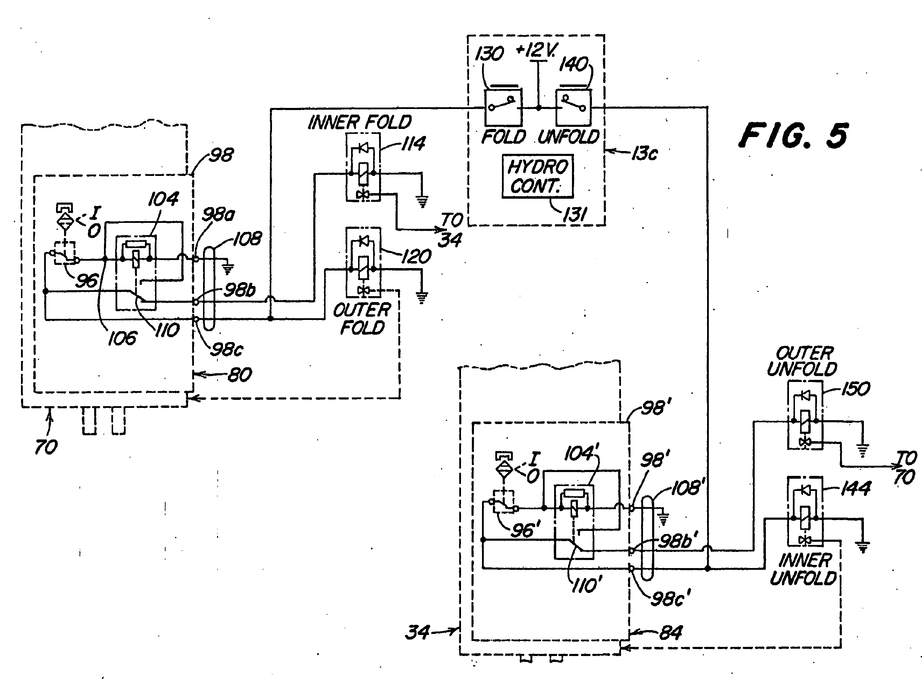

Die gesamte Breite des Geräts 13 kann 27 Meter (90 Fuß) oder mehr betragen, wenn die Gestängeabschnitte 44, 50, 56 vollkommen ausgefaltet sind (Fig. 4a), und die inneren Gestängeabschnitte 44, 56 betragen ungefähr die Hälfte der Länge der äußeren Gestängeabschnitte 50. Die Ein- und Ausfaltreihenfolge muß vorsichtig gesteuert werden, um übermäßige Belastungen in dem Gestänge 14, 16 und in den Motoren 28, 30, 34, 36 zu vermeiden. Daher werden die inneren Gestängeabschnitte 44, 56 nicht geschwenkt, bevor die äußeren Gestängeabschnitte 50 nicht neben die dazugehörigen inneren Gestängeabschnitte 44, 56 (Fig. 1) geschwenkt sind, so daß der Schwerpunkt jeder Seite des Gestänges 14, 16 näher an den Gelenkbereich der inneren Gestängeabschnitte 44, 56 gebracht wird. Um Signale bezüglich des ordnungsgemäßen Aus- und Einfaltens der Gestänge 14, 16 bereitzustellen und um Verschmutzungsprobleme in schmutzbeladenem Umfeld des Geräts 13 zu reduzieren, ist der Motor 70 mit einem internen Sensor 80 (Fig. 5 und 6) zum Erfassen der Stellung des Motors 70 bzw. dessen Hydraulikkolbens versehen, der einen Teil eines elektrohydraulischen Schaltkreises (Fig. 5) für die Faltreihenfolge darstellt, und der innere Motor 34 enthält einen vergleichbaren Sensor 84 (Fig. 2 und 5), der dazu benutzt wird, die Ausfaltreihenfolge zu steuern. Lediglich die Elemente für den Sensor 80 werden in Einzelheiten beschrieben, während die entsprechenden Elemente in dem Sensor 84 in gleicher Weise nummeriert aber in Figur 5 mit einem Hochkomma versehen sind.

Jeder der Sensoren 80 und 84 enthält einen Magneten 90 (Fig. 6), der an dem Kolbenende einer Kolbenstange 92 befestigt ist. Der Magnet 90 erstreckt sich in eine Kammer 94, die sich an dem Fußende des Zylinders befindet, wenn der Motor 70 vollkommen eingefahren ist. Ein magnetbetätigter normalerweise geschlossener Schalter 96 (Fig. 5) befindet sich in einem zylindrischen, mit Gewinde versehenen Gehäuse 98. Das Gehäuse 98 ist in eine Gewindebohrung in dem Fußende des Zylinders eingeschraubt, so daß der Schalter 96 dem Magneten 90 nahegelegen ist und in den geöffneten Zustand wechselt, wenn der Motor 70 vollkommen eingefahren ist, wie dies in Figur 6 gezeigt ist.

In dem Gehäuse 98 befindet sich ebenfalls ein als Bootstrap-Relais ausgebildetes Relais 104, das einen Steuereingang 106 enthält, der an den geschalteten Ausgang des Schalters 96 angeschlossen ist. Der entgegengesetzte Steuerausgang des Relais 104 ist über ein Kabel 108 an Masse angelegt, das in einen von drei Ausgängen 98a, 98b, und 98c gesteckt ist, die sich in dem Gehäuse 98 befinden. Der Eingang des Schalters 96 ist an den Eingang eines Relaisschalters oder Schalters 110 angeschlossen. Der Schalter 110 enthält einen ersten geschalteten Ausgang, der an den Steuereingang 106 angeschlossen ist, und einen zweiten geschalteten Ausgang, der an den mittigen Ausgang 98b des Gehäuses 98 angeschlossen ist. Der verbleibende Ausgang des Gehäuses 98 ist mit dem Eingang des Schalters 96 und des Schalters 110 verbunden. Wenn das Relais 104 aktiviert ist, wird sich daher der Schalter 110 aus der in Figur 5 gezeigten Stellung nach oben bewegen, um den unteren Ausgang 98c des Gehäuses 98 und den Eingang des Schalters 96 mit dem Steuereingang 106 zu verbinden.

Der Ausgang 98b des Sensors 80 ist mittels des Kabels 108 an den Steuereingang eines elektrohydraulischen Ventils 114 angeschlossen, das die Faltbewegung des inneren Gestängeabschnitts 44 steuert, d. h. das Ausfahren des Motors 34. Wenn der Ausgang 98b bestromt wird, wird das Ventil 114 aktiv, um das Fußende des Motors 34 unter Druck zu setzen, was den Motor 34 veranlasst, auszufahren. Der Anschluß 98c ist mittels des Kabels 108 an den Steuereingang eines elektrohydraulischen Ventils 120 angeschlossen, das die Faltbewegung des äußeren Gestängeabschnitts 50 steuert, d. h. das Einfahren des Motors 70. Eine Bestromung des Anschlusses 98c aktiviert das Ventil 120 und setzt das Stangenende des Motors 70 unter Druck, was diesen veranlasst, einzufahren.

Ein normalerweise offener Schalter 130 für die Faltbewegung, der sich auf der Bedienerplattform in der Kabine 13c nahe einer Hauptsteuerung 131 oder einer Hydrauliksteuerung befindet, ist zwischen den Spannungsausgang des Geräts 13 und den Anschluß 98c geschaltet. Durch ein Niederdrücken des Schalters 130 aktiviert die Bedienungsperson das Ventil 120 und setzt das Stangenende des äußeren Motors 70 unter Druck. Wenn der Motor 70 nicht bereits vollends eingefahren und der äußere Gestängeabschnitt 50 nicht bereits vollends eingefaltet ist, wird sich der Schalter 96 in seiner in Figur 5 gezeigten Stellung befinden, d. h. der Magnet 90 befindet sich nicht neben dem Schalter 96, so daß das Relais 104 derart aktiv ist, daß es den Kreis zwischen dem Anschluß 98c und dem Steuereingang 106 schließt, um das Relais 104 so lange in der aktiven Stellung zu halten, wie die Bedienungsperson den Schalter 130 niederdrückt. Daher ist der Anschluß 98b geöffnet, sodaß das Ventil 114 für den inneren Motor 34 nicht aktiv werden kann, um den Motor 34 auszufahren und den inneren Gestängeabschnitt 44 zu bewegen. Wenn der Motor 70 einmal vollends eingefahren ist, sodaß der äußere Gestängeabschnitt 50 vollkommen eingefaltet ist, öffnet der Schalter 96. Jedoch bleibt das Relais 104 in der Ein-Stellung angezogen, solange die Bedienungsperson den Schalter 130 niederdrückt. Das Halten des Relais 104 verhindert ein Bestromen des Anschlusses 98b und eine Einleitung der Faltbewegung des inneren Gestängeabschnittes 44, bevor der äußere Gestängeabschnitt 50 vollkommen eingefaltet ist und die Bedienungsperson den Schalter 130 loslässt, um es dem Relais 104 zu ermöglichen, inaktiv zu werden. Sobald das Relais 104 inaktiv ist, ist der Ausgang 98b an den Ausgang 98c angeschlossen, so daß ein Drücken des Schalters 130 das Einfalten des inneren Gestängeabschnitts 44 hervorruft. Daher kann die Bedienungsperson den Einfaltvorgang des inneren Gestängeabschnitts 44 nicht dadurch unabsichtlich beginnen, indem sie den Schalter 130 ständig niedergedrückt hält. Das Einfalten des inneren Gestängeabschnitts 44 beginnt erst, nachdem der äußere Gestängeabschnitt 50 ganz eingefaltet und der Schalter 130 losgelassen und dann wieder betätigt worden ist. Dieses Merkmal hilft einer Bedienungsperson auch, die in Figur 4b gezeigte schmale Arbeitsstellung einzustellen, ohne daß es notwendig wäre, daß sie den Schalter 130 genau in dem Moment loslässt, in dem der äußere Gestängeabschnitt 50 seine vollkommen eingefaltete Stellung erreicht.

Die Ausfaltreihenfolge der Gestänge 14, 16 wird mittels des Kreises in Figur 5 gesteuert, und zwar mit einem Steuereingang von dem Sensor 84 auf den Motor 34 für das innere Gestänge 44, um somit sicherzustellen, daß der innere Gestängeabschnitt 44 von seiner in Figur 4c gezeigten eingeklappten Stellung vollkommen ausklappt, bevor der äußere Gestängeabschnitt 50 anfangen kann, auszuklappen. Ein Schalter 140 zum Ausklappen befindet sich in der Kabine 13c neben dem Schalter 130 für das Einklappen und ist an die Spannungsquelle und den Ausgang 98c' des Sensors 84 für den Motor 34 des inneren Gestängeabschnitts 44 angeschlossen. Der Steuereingang eines Ventils 144 zum Ausklappen des inneren Gestängeabschnitts 44 ist ebenfalls an den Anschluß 98c' und an den Motor 34 angeschlossen, um das Stangenende des Motors 34 unter Druck zu setzen, wenn der Schalter 140 niedergedrückt wird. Der Anschluß 98b' ist an den Steuereingang eines Ventils 150 zum Ausfalten des äußeren Gestängeabschnitts 50 angeschlossen, um den Zylinderboden des Motors 70 unter Druck zu setzen und den äußeren Gestängeabschnitt 50 auszufalten, wenn der Anschluß 98b' bestromt wird. Das Ventil 150 zum Ausfalten des äußeren Gestängeabschnitts 50 kann nur dann aktiviert werden, wenn der Motor 34 für den inneren Gestängeabschnitt 44 vollkommen eingefahren ist (d. h., der innere Gestängeabschnitt 44 ist vollkommen ausgefaltet, wie dies in Figur 4b gezeigt ist). Wenn der Motor 34 für den inneren Gestängeabschnitt 44 nicht vollkommen eingefahren ist, ist der Schalter 96' geschlossen, und das Relais 104' wird zu jeder Zeit aktiv, wenn der Schalter 140 niedergedrückt wird, sodaß der Anschluß 98b' offen und das Ventil 150 inaktiv bleibt. Wenn der Motor 34 einmal vollkommen eingefahren ist und der innere Gestängeabschnitt 44 seine vollkommen ausgefaltete Stellung gemäß Figur 4b erreicht, wird der Schalter 96' öffnen. Jedoch bleibt das Relais 104' in der Ein-Stellung angezogen, so daß der äußere Gestängeabschnitt 50 nicht ausklappen wird, bevor die Bedienungsperson den Schalter 140 loslässt und das Relais 104' somit loslässt, um den Ausgang 98b' direkt mit dem Ausgang des Schalters 140 zu verbinden. Danach wird ein Niederdrücken des Schalters 140 wieder das Ventil 150 zum Ausklappen des äußeren Gestängeabschnitts 50 aktivieren, um den Motor 70 auszufahren und den äußeren Gestängeabschnitt 50 in die in Fig. 4a gezeigte Stellung auszuklappen. Daher kann eine Bedienungsperson das Gestänge 14 nicht irrtümlicherweise über die in Figur 4b gezeigte Stellung hinaus ausklappen, wenn sie den Schalter 140 ständig gedrückt hält.

Ein Schaltkreis wird dazu benutzt, das rechte Gestänge 16 in gleicher Weise zu steuern, wie dies für das linke Gestänge 14 in Figur 5 gezeigt und zuvor beschrieben ist. Schalter 130' und 140' (Fig. 4c) befinden sich in der Nachbarschaft zu den Schaltern 130 und 140, so daß beide Gestänge 14 und 16 gemeinsam oder ein Gestänge 14 oder 16 alleine gesteuert werden können, ohne daß sich die Bedienungsperson von ihrer normalen Arbeitsstellung entfernen müsste. Der Schaltkreis befindet sich im wesentlichen vollkommen innerhalb der Gehäuse 98 und 98', und diese können leicht von den Drähten getrennt, von den Motoren abgeschraubt und für eine einfache Diagnose von Systemproblemen und für notwendige Reparaturen ersetzt werden.

## Patentansprüche

1. Gestänge (14, 16) eines landwirtschaftlichen Geräts (13) mit mehreren Gestängeabschnitten (44, 50, 56), die gelenkig miteinander verbunden sind und mittels wenigstens zweier Motoren (34, 36, 70) in eine erste und eine zweite Klappstellung bringbar sind, **dadurch gekennzeichnet, daß** die Motoren (34, 36, 70) mit Sensoren (80, 84) versehen sind, die ein Endstellungssignal erzeugen und an eine Steuervorrichtung liefern, die eine Aktivierung eines nächsten Motors (34, 36, 70) erst bei Vorliegen eines Endstellungssignals zulässt, wobei der Sensor (80, 84) in den Motor (34, 36, 70) integriert ist.

2. Gestänge nach Anspruch 1, **dadurch gekennzeichnet, daß** der Sensor (80, 84) mit einem Magneten (90) und einem als magnetischer Näherungsschalter ausgebildeten Schalter (96) versehen ist.

3. Gestänge nach einem oder mehreren der vorherigen Ansprüche, **dadurch gekennzeichnet, daß** der Motor (34, 36, 70) eine Kammer (94) aufweist, in die sich ein über einen Kolben hinauserstreckender Teil einer Kolbenstange (92) bewegen kann, wobei der Teil zur Aktivierung des Sensors (80, 84) insbesondere mit einem Magneten (90) versehen ist.

4. Gestänge nach einem oder mehreren der vorherigen Ansprüche, **dadurch gekennzeichnet, daß** die jeweils eingefahrene Stellung des Motors (34, 36, 70) bei einem innenliegenden Gestängeabschnitt (44, 56) des Gestänges (14, 16) dessen ausgefalteter und bei einem außenliegenden Gestängeabschnitt (50) des Gestänges (14, 16) dessen eingefalteter Stellung entspricht.

5. Gestänge nach einem oder mehreren der vorherigen Ansprüche, **dadurch gekennzeichnet, daß** die Steuervorrichtung einen Schalter (130) für die Einleitung des Einklappvorgangs und/oder einen Schalter (140) für die Einleitung des Ausklappvorgangs aufweist, der in Reihe mit einem von einem Relais (104, 104') betätigten Schalter (110, 110') geschaltet ist, wobei das Relais (104, 104') erst dann abfällt, wenn der zugeordnete Sensor (80, 84) ein Endstellungssignal liefert und der Schalter (130, 140) deaktiviert ist.

6. Gestänge nach einem oder mehreren der vorherigen Ansprüche, **gekennzeichnet durch** einen mittleren Gestängetragrahmen (22), an den seitlich jeweils ein innerer Gestängeabschnitt (44, 56), und an diesen ein äußerer Gestängeabschnitt (50), jeweils um wenigstens vertikal ausgerichtete Schwenkachsen angeschlossen ist, wobei zwischen dem Gestängetragrahmen (22) und dem inneren Gestängeabschnitt (44, 56) ein Motor (34, 36) wirkt, der zum Einklappen des inneren Gestängeabschnitts (44, 56) eingefahren wird, und zwischen dem inneren Gestängeabschnitt (44, 56) und dem äußeren Gestängeabschnitt (50) ein Motor (70) wirkt, der zum Einklappen des inneren Gestängeabschnitts (44, 56) eingefahren wird.

7. Gestänge nach einem oder mehreren der vorherigen Ansprüche, **dadurch gekennzeichnet, daß** der Motor (34, 36, 70) als ein Hydraulikmotor ausgebildet ist.

8. Gestänge nach einem oder mehreren der vorherigen Ansprüche, **dadurch gekennzeichnet, daß** die Steuervorrichtung, ein Sensor (80, 84) und ein Schalter (110, 110') in einem Gehäuse (98) in den Motor (34, 36, 70) eingebaut ist.

9. Verfahren zum Einklappen eines Gestänges (14, 16) eines landwirtschaftlichen Geräts (13), **dadurch gekennzeichnet, daß** bei ausgefaltetem Gestänge (14, 16) ein äußerer Gestängeabschnitt (50) an einen inneren Gestängeabschnitt (44) herangeschwenkt wird, die innere Endstellung eines diese Schwenkbewegung vollziehenden Motors (70) ermittelt und einer Steuervorrichtung mitgeteilt wird, ein Schalter (130) zum Einfalten deaktiviert und wieder aktiviert wird und die Steuervorrichtung bei Vorliegen eines Endstellungssignals des äußeren Motors (70) einen Schalter (110) für eine Aktivierung eines inneren Motors (34, 36) für den inneren Gestängeabschnitt (44) schließt.

10. Verfahren zum Ausklappen eines Gestänges (14, 16) eines landwirtschaftlichen Geräts (13), **dadurch gekennzeichnet, daß** bei eingefaltetem Gestänge (14, 16) ein innerer Gestängeabschnitt (44, 56) mit einem äußeren Gestängeabschnitt (50) ausgeschwenkt wird, die innere Endstellung eines diese Schwenkbewegung vollziehenden Motors (34, 36) ermittelt und einer Steuervorrichtung mitgeteilt wird, ein Schalter (140) zum Ausfalten deaktiviert und wieder aktiviert wird und die Steuervorrichtung bei Vorliegen eines Endstellungssignals des inneren Motors (34, 36) einen Schalter (110') für eine Aktivierung eines äußeren Motors (70) für den äußeren Gestängeabschnitt (50) schließt.

## Claims

1. Linkage (14, 16) for an agricultural implement (13), having a plurality of linkage sections (44, 50, 56) which are connected together in an articulated manner and can be moved into a first and a second folded position by means of at least two motors (34, 36, 70), **characterized in that** the motors (34, 36, 70) are provided with sensors (80, 84) which produce an end-position signal and supply it to a control device which permits activation of a next motor (34, 36, 70) only when an end-position signal is present, wherein the sensor (80, 84) is integrated in the motor (34, 36, 70).

2. Linkage according to Claim 1, **characterized in that** the sensor (80, 84) is provided with a magnet (90) and a switch (96) configured as a magnetic proximity switch.

3. Linkage according to one or both of the preceding claims, **characterized in that** the motor (34, 36, 70) has a chamber (94), into which a part, extending beyond a piston, of a piston rod (92) can move, wherein the part is provided in particular with a magnet (90) in order to activate the sensor (80, 84).

4. Linkage according to one of more of the preceding claims, **characterized in that** the respectively retracted position of the motor (34, 36, 70) corresponds to the folded-out position of the linkage (14, 16) in the case of a linkage section (44, 56) thereof located on the inside and corresponds to the folded-in position of the linkage (14, 16) in the case of a linkage section (50) thereof located on the outside.

5. Linkage according to one or more of the preceding claims, **characterized in that** the control device has a switch (130) for starting the folding-in operation and/or a switch (140) for starting the folding-out operation, which is connected in series with a switch (110, 110') that is actuated by a relay (104, 104'), wherein the relay (104, 104') is only deenergized when the assigned sensor (80, 84) supplies an end-position signal and the switch (130, 140) is deactivated.

6. Linkage according to one or more of the preceding claims, **characterized by** a central linkage supporting frame (22), to the sides of which in each case an inner linkage section (44, 56) is attached and to the latter an outer linkage section (50) is attached, in each case about at least vertically oriented pivot axes, wherein a motor (34, 36) acts between the linkage supporting frame (22) and the inner linkage section (44, 56), said motor (34, 36) being retracted in order to fold in the inner linkage section (44, 56), and a motor (70) acts between the inner linkage section (44, 56) and the outer linkage section (50), said motor (70) being retracted in order to fold in the inner linkage section (44, 56).

7. Linkage according to one or more of the preceding claims, **characterized in that** the motor (34, 36, 70) is configured as a hydraulic motor.

8. Linkage according to one or more of the preceding claims, **characterized in that** the control device, a sensor (80, 84) and a switch (110, 110') are installed in a housing (98) in the motor (34, 36, 70).

9. Method for folding in a linkage (14, 16) of an agricultural implement (13), **characterized in that**, with the linkage (14, 16) folded out, an outer linkage section (50) is pivoted towards an inner linkage section (44), the inner end position of a motor (70) executing this pivoting movement is determined and imparted to a control device, a switch (130) for folding in is deactivated and reactivated and, when an end-position signal from the outer motor (70) is present, the control device closes a switch (110) in order to activate an inner motor (34, 36) for the inner linkage section (44).

10. Method for folding out a linkage (14, 16) of an agricultural implement (13), **characterized in that**, with the linkage (14, 16) folded in, an inner linkage section (44, 56) is pivoted out with an outer linkage section (50), the inner end position of a motor (34, 36) executing this pivoting movement is determined and imparted to a control device, a switch (140) for folding out is deactivated and reactivated and, when an end-position signal from the inner motor (34, 36) is present, the control device closes a switch (110') in order to activate an outer motor (70) for the outer linkage section (50).

## Revendications

1. Rampe (14, 16) d'un engin agricole (13) comprenant plusieurs portions de rampe (44, 50, 56), qui sont connectées de manière articulée les unes aux autres et qui peuvent être amenées au moyen d'au moins deux moteurs (34, 36, 70) dans une première et une deuxième position de repliement, **caractérisée en ce que** les moteurs (34, 36, 70) sont pourvus de capteurs (80, 84), qui génèrent un signal de position d'extrémité et qui le transmettent à un dispositif de commande qui autorise une activation d'un moteur suivant (34, 36, 70) seulement en présence d'un signal de position d'extrémité, le capteur (80, 84) étant intégré dans le moteur (34, 36, 70).

2. Rampe selon la revendication 1, **caractérisée en ce que** le capteur (80, 84) est pourvu d'un aimant (90) et d'un commutateur (96) réalisé sous forme de détecteur de proximité magnétique.

3. Rampe selon l'une quelconque ou plusieurs des revendications précédentes, **caractérisée en ce que** le moteur (34, 36, 70) présente une chambre (94), dans laquelle peut se déplacer une partie d'une tige de piston (92) s'étendant au-delà d'un piston, la partie étant munie notamment d'un aimant (90) pour l'activation du capteur (80, 84).

4. Rampe selon l'une quelconque ou plusieurs des revendications précédentes, **caractérisée en ce que** la position respectivement rentrée du moteur (34, 36, 70), dans le cas d'une portion de rampe (44, 56) de la rampe (14, 16) située à l'intérieur, correspond à la position déployée de cette dernière, et dans le cas d'une portion de rampe (50) de la rampe (14, 16) située à l'extérieur, correspond à la position rentrée de cette dernière.

5. Rampe selon l'une quelconque ou plusieurs des revendications précédentes, **caractérisée en ce que** le dispositif de commande présente un commutateur (130) pour amorcer l'opération de repliement et/ou un commutateur (140) pour amorcer l'opération de dépliement, lequel est monté en série avec un commutateur (110, 110') actionné par un relais (104, 104'), le relais (104, 104') se désactivant seulement lorsque le capteur associé (80, 84) fournit un signal de position d'extrémité et que le commutateur (130, 140) est désactivé.

6. Rampe selon l'une quelconque ou plusieurs des revendications précédentes, **caractérisée par** un cadre porteur de rampe central (22), auquel est raccordée latéralement à chaque fois une portion de rampe interne (44, 56), et à celle-ci une portion de rampe externe (50), à chaque fois autour d'axes de pivotement orientés au moins verticalement, un moteur (34, 36) agissant entre le cadre porteur de rampe (22) et la portion de rampe interne (44, 56), lequel moteur est rentré pour replier la portion de rampe interne (44, 56), et un moteur (70) agissant entre la portion de rampe interne (44, 56) et la portion de rampe externe (50), lequel moteur est rentré pour replier la portion de rampe interne (44, 56).

7. Rampe selon l'une quelconque ou plusieurs des revendications précédentes, **caractérisée en ce que** le moteur (34, 36, 70) est réalisé sous forme de moteur hydraulique.

8. Rampe selon l'une quelconque ou plusieurs des revendications précédentes, **caractérisée en ce que** le dispositif de commande, un capteur (80, 84) et un commutateur (110, 110') sont intégrés dans un boîtier (98) dans le moteur (34, 36, 70).

9. Procédé pour replier une rampe (14, 16) d'un engin agricole (13), **caractérisé en ce que**, lorsque la rampe (14, 16) est dépliée, une portion de rampe externe (50) est pivotée à proximité d'une portion de rampe interne (44), la position d'extrémité interne d'un moteur (70) effectuant ce mouvement de pivotement est détectée et communiquée à un dispositif de commande, un commutateur (130) pour le repliement est désactivé et à nouveau activé et le dispositif de commande, en présence d'un signal de position d'extrémité du moteur externe (70), ferme un commutateur (110) pour une activation d'un moteur interne (34, 36) pour la portion de rampe interne (44).

10. Procédé pour déplier une rampe (14, 16) d'un engin agricole (13), **caractérisé en ce que**, lorsque la rampe (14, 16) est repliée, une portion de rampe interne (44, 56) est pivotée vers l'extérieur avec une portion de rampe externe (50), la position d'extrémité interne d'un moteur (34, 36) effectuant ce mouvement de pivotement est détectée et communiquée à un dispositif de commande, un commutateur (140) pour le dépliement est désactivé et à nouveau activé et le dispositif de commande, en présence d'un signal de position d'extrémité du moteur interne (34, 36), ferme un commutateur (110') pour une activation d'un moteur externe (70) pour la portion de rampe externe (50).
